Europäisches Patentamt

European Patent Office

Office européen des brevets

(19)

(11) Publication number: **0 128 671**
A2

# EUROPEAN PATENT APPLICATION

(21) Application number: **84303248.3**

(22) Date of filing: **14.05.84**

(51) Int. Cl.³: **H 02 P 7/48, H 02 K 17/14**

(30) Priority: **17.05.83 GB 8313503**
**17.01.84 GB 8401199**

(43) Date of publication of application: **19.12.84**
**Bulletin 84/51**

(84) Designated Contracting States: **DE FR GB IT SE**

(71) Applicant: **Binns, Donald Francis, 73 Chapel Lane Hale Barns, Altrincham Cheshire WA15 0BN (GB)**
Applicant: **Williams, Kevin Thomas, 504 Holcombe Road, Greenmount Bury Lancashire (GB)**

(72) Inventor: **Binns, Donald Francis, 73 Chapel Lane Hale Barns, Altrincham Cheshire WA15 0BN (GB)**
Inventor: **Williams, Kevin Thomas, 504 Holcombe Road, Greenmount Bury Lancashire (GB)**

(74) Representative: **Kinrade, John et al, Marks & Clerk Scottish Life House Bridge Street, Manchester M3 3DP (GB)**

(54) **Improvements in or relating to electric motors.**

(57) In an A.C. electric motor such as a three-phase two pole stator motor there are three stator windings, one winding for each phase. Each winding consists of a plurality of coils of which plurality half the coils forming a first group (A1, $\overline{A1}$, A2, $\overline{A2}$, A3, $\overline{A3}$) are associated with one pole and the other half forming a second group (A10, $\overline{A10}$, A11, $\overline{A11}$, A12, $\overline{A12}$) are associated with the other pole. In relation to a pole pitch each coil in one group has a positional counterpart in the other group. First, second and third semiconductor switch means (S1, S2, S3) are arranged so that when the third switch means (S3) closed and the first and second switch means (S1, S2) are open all the coils of the winding are in series but when only the first and second switch means (S1, S2) are closed one (A10. $\overline{A10}$) or more of the coils (A10, $\overline{A10}$, A11, $\overline{A11}$, A12, $\overline{A12}$) in series in the second group is/are connected in parallel with its or their series connected positional counterpart coil(s) in the first group. Thus in parallel mode connection of the winding the number of effective turns of the winding is reduced and the magnetic flux is increased whereas in the series mode connection by the closed third switch means the effective winding turns is the sum of the turns of all the coils in both groups, and the magnetic flux is decreased. The magnitude of the supply current of one of the phases is measured and if it exceeds a predetermined value control means operate the switch means to establish the series mode connection in each of the three windings otherwise the parallel mode connection exists in all three. Thus the switching from series to parallel mode and vice-versa in each winding renders the motor capable of delivering the power and torque required by the load on the motor whilst sustaining low energy losses over a typical duty cycle.

ACTORUM AG

IMPROVEMENTS IN OR RELATING TO ELECTRIC MOTORS

The present invention relates to electric motors and, in particular, to an electric motor which is capable of working at or near its optimum efficiency level at both high and low loading levels.

The power losses in the steel laminations of the stator and rotor of a motor, and in some cases in an excitation winding as well, depend on the magnetic flux that is required in the air gap. The flux also determines the torque the machine is capable of producing for a given current in the windings, since it is the reaction of the flux with the current that produces the torque. In conventional electric motors, including single-phase and multi-phase a.c. motors, the flux remains constant for a given supply voltage irrespective of the load torque imposed on the machine. However, in use the load torque applied to the motor is likely at certain times to be small relative to the full load torque of the machine and at these times a high flux density in the air gap is unnecessary. Correspondingly a high flux density in the steel laminations is also unnecessary.

One type of controller at present in use with induction motors is known as a power factor controller. A phase-controlled thyristor switch or triac is used which cuts off the voltage and current supply to the motor over part of each half cycle of the current wave whenever the load torque, and therefore the motor stator current, is below some preset value. The phase angles at which the thyristors

2.   0128671

..re and therefore the amount of time in each half cycle that the supply voltage and current are cut off by the thyristors is made to vary according to the stator current, load torque or slip of the motor or some other measure of loading.  This has the effect of reducing the total energy loss in the iron magnetic circuit at those times when the stator  current is relatively low and consequently the phase angle of thyristor switching can be delayed after the zero crossing point of the current.  However, this phase control of thyristor conduction causes the motor to draw harmonic currents from the supply and this is undesirable.  Also the energy losses in the thyristors themselves are relatively large when they are phase controlled rather than switched at the zero crossing point of the current wave, and, in consequence, the energy losses occurring in the thyristors at times when relatively high currents flow in the motor windings are likely to completely offset the benefits of reduced energy losses in the iron at low currents under a typical duty cycle for variable loading of the motor.

It is an object of the present invention to provide an electric motor in which the flux density is made to vary with the load-torque thereby improving motor efficiency.

According to the invention there is provided an A.C. electric motor comprising a winding comprising a first plurality of common phase electrical coils connected to the electrical supply, said coils forming a plurality of groups of coils each group corresponding to a respective pole, a second plurality of the said coils being

0128671

ermanently connected in series and constituting a first set, a second set of said coils being constituted by another one of the said coils or by a third plurality of the said coils in which the coils of said third plurality are permanently connected in series, the or each coil of the second set having a disposition in relation to the pole pitch of its corresponding pole which is the same as or the counterpart of the disposition of a said coil of the first set relation the pole pitch of its corresponding pole, switching means adapted to connect the sets in either of first or second configurations, the first configuration being the first and second sets in series, the second configuration being the coil or the coils of the second set in parallel with its counterpart coil or their counterpart coils of the first set, means for sensing the load torque on the motor or a parameter dependent thereon, and control means responsive to an output of said sensing means to operate the switching means to connect the electrical coils in one or other of said configurations capable of delivering the power and torque required by the load on the motor whilst sustaining low energy losses over a typical duty cycle.

The A.C. motor can be a single phase motor or a poly-phase motor. In a three phase motor, for example, there are three first pluralities of coils, each respective first plurality being supplied with current at a different respective phase.

The or each first plurality of coils can be stator coils or rotor coils or the stator and rotor may each have a respective first plurality of coils, or in a poly-phase

4. 0128671

motors the stator and rotor may each have a number of first pluralities of coils, that number equalling the number of phases of the electrical supply.

Embodiments of the present invention will now be described, by way of example, with reference to the accompnying drawings, in which :-

Fig. 1 is a cross-sectional view of the coils of a motor over two poles of a double layer, 3-phase winding having a $60^{\circ}$ phase spread and 3 slots per pole per phase;

Fig. 2 shows a connection diagram of an arrangement of the coils in Fig. 1 and switching provided therebetween in an A.C. motor formed according to the invention;

Fig. 3 shows the circuit diagram of an alternative arrangement of the coils in Fig. 1 and switching provided therebetween in another embodiment of A.C. motor formed according to the invention;

Fig. 4 shows a schematic view of a sensor for use in a motor formed according to the invention;

Fig. 5 shows a typical characteristic for the output voltage signal of the sensor of Fig. 4 with respect to motor input current;

Fig. 6 shows a block diagram of a complete control system for a motor according to the invention, and

Fig. 7 shows an alternative portion of the control system in Fig. 6.

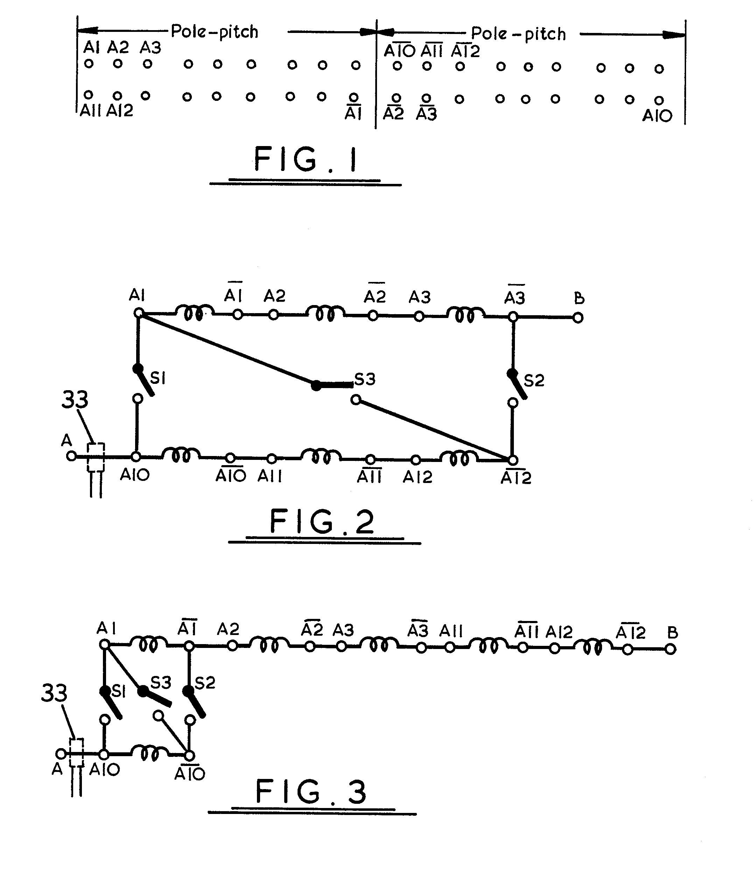

Referring to Fig. 1 there is shown a cross-sectional view of the coils over two poles of a conventional, 3-phase winding having a 60$^{\circ}$ phase spread and 3 slots per pole per phase, the coils being short pitched by one slot. A1 A$\overline{1}$, A2 A$\overline{2}$, A3 A$\overline{3}$, A10 A$\overline{10}$, A11 A$\overline{11}$, and A12 A$\overline{12}$ denote the respective ends of each coil belonging to one phase, the other two phases being similarly arranged with their winding axes displaced by one third of a double pole pitch.

Referring to Figs. 2 and 3 it will be seen that the coils in each phase may be connected in a variety of configurations, each of which produces a particular flux level for a given supply voltage that is appropriate to the load-torque imposed on the motor.

In the arrangement of Fig. 2 the three coils of a phase in each pole are connected in series; that is A1 A$\overline{1}$ is connected to A2 A$\overline{2}$ which in turn is connected to A3 A$\overline{3}$ in one pole to form one pole group and A10 A$\overline{10}$ is connected to A11 A$\overline{11}$ which in turn is connected to A12 A$\overline{12}$ in the next pole to form another pole group. As shown the two pole groups are isolated from each other, however, it will be readily appreciated that they can be connected either in series or in parallel with respect to each other between terminals AB (the supply voltage terminals) using switches S1, S2 and S3. When switches S1 and S2 only are closed the two pole groups are connected in parallel as is required for high torque operation, whilst when switch S3 only is closed the two pole groups are placed in series as is required for low torque operation.

The flux density corresponding to one phase winding is inversely proportional to the total number of effective turns of all the coils in series of that winding. When the coils of one phase winding are in series by closing switches S3, the effective number of turns of that winding is the sum of all the turns of all the coils of the winding. But by connecting the coils in parallel by closing the switches S1, S2 the effective number of turns in the winding is reduced thus increasing the flux density. For example, if all the coils of the phase winding shown in Fig. 2 have the same number of turns, the effective number of turns of the winding in the parallel connection mode is reduced to half as compared to the series connection.

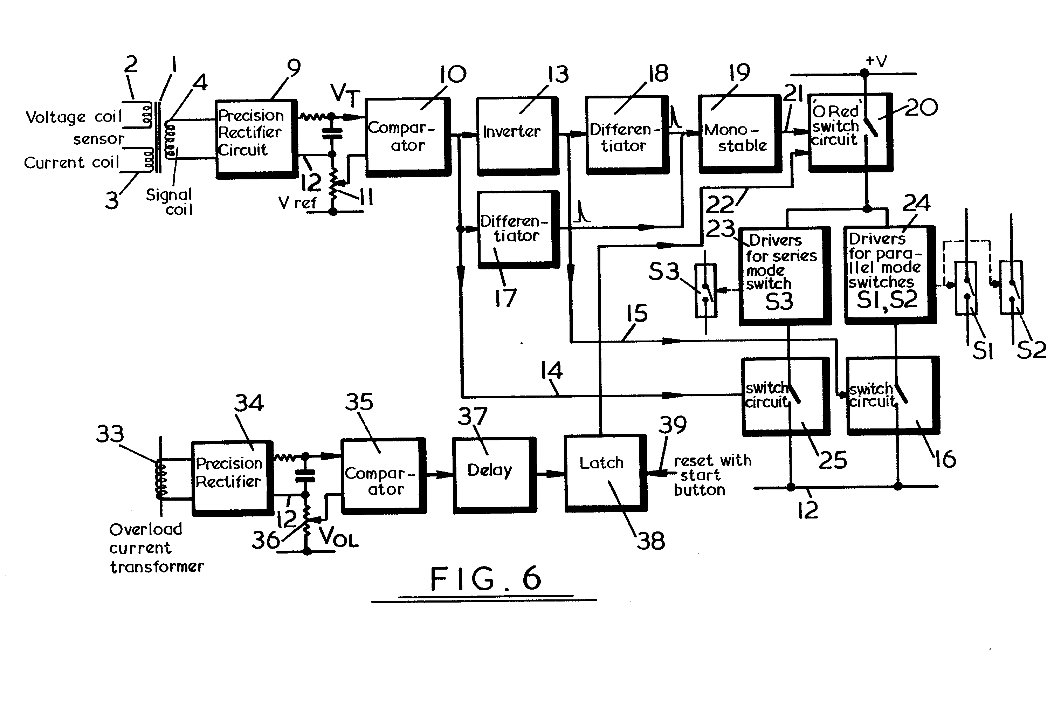

In order to control the operation of the switches S1, S2 and S3 in each of the three phases to open and to close in accordance with the torque imposed on the motor means (not shown in full) are provided to sense the motor current in one or more of the phases which in turn actuates a switch controller (Fig. 6). The switch controller automatically operates the switches S1, S2 and S3 to connect the pole groups in the appropriate mode for the instantaneous load torque imposed on the motor. The

7.    0128671

switches S1, S2 and S3 are comprised of electronic
switching devices, for example, thyristors, transistors,
etc.

The switching of the pole groups in the way
described hereinabove results in lower energy
losses in the motor and an increased power factor
for the current taken.  The switching of connections
may be made at just one predetermined value of
load current or torque, or alternatively changes
may be made at a plurality of load currents and
load-torques, in which case a plurality of modes of
connection will be provided.  The latter option is
particularly appropriate to motors with more than
two poles, where pole groups may be connected in
series, series-parallel or parallel configurations.

As indicated hereinabove the present invention
provides that suitable   coil   connections are
made for use over a particular range of values of
load torque and motor supply current and for a
load torque or motor supply current outside this
range a different   coil   connection is made.
This control of the coil    connections leads to
a reduction in energy losses in a motor that is
used over a range of load torques and motor supply
currents during the duty cycle.  A further benefit
is the so-called 'soft start' characteristic whereby
the motor takes less current from the supply on
starting and suffers lower mechanical forces and

8.                    0128671

may also use less energy during starting. This is achieved through the action of the controller in conjunction with the sensors in selecting a favourable coil connection. In the present invention as it is applied to a.c. motors and also when thyristors are used to switch coils in the stator, and, where appropriate, in the rotor, from one mode of connection to another the thyristors switch on at or relatively close to the zero crossing point of the current. The switching devices used in a two-mode control arrangement connect sections of the motor coils in the stator and in some cases also in the rotor in series at times when the stator current and load torque are relatively low and in parallel when the stator current and load torque are high in relation to the full-load rated values. When more than two modes of connection are used the coils may be switched into various series, parallel and series-parallel arrangements according to the stator current or load torque. The changeover of coil connections is made rapidly in each phase of a multi-phase motor or in a single-phase motor in response to the output of a sensor that gives a signal dependent on the stator current, stator-voltage, rotor current, slip,load torque or some other suitable indicator of the instantaneous torque the machine is required to develop. Consequently, a sudden increase in load

9.  0128671

torque applied to a motor that has had its coils
connected into a low-torque mode of operation can
rapidly revert to a high torque to prevent
stalling of the motor. It is a feature of the
automatically switched coil arrangements of the
motor that it is economic to produce a higher
maximum torque than is customary for the same frame
size and for the same values of other key parameters
of the motor rating.

Referring now to Fig. 3 there is shown an
alternative arrangement in which coils A1 A$\overline{1}$ and A10
A$\overline{10}$ from respective pole groups may be connected
together either in parallel, with only switch S3
open and switches S1 and S2 closed or in series with
switches S1 and S2 open and only switch S3 closed. As
in the arrangement of Fig. 2, the parallel connection
is used for high load-torque operation and the series
connection is used for low torque operation. The
coils A1 A$\overline{1}$ and A10 A$\overline{10}$ each have twice the number of
turns per coil as A2 A$\overline{2}$, A3 A$\overline{3}$, A11 A$\overline{11}$ and A12 A$\overline{12}$
each have. It will be understood from Fig. 3 that
with switch S3 open and switches S1 and S2 closed the
mode of connection may be termed series-parallel since
certain of the coils are in parallel, i.e. the coils
A1 A$\overline{1}$ and A10 A$\overline{10}$, but those parallel coils are in
series with other coils in series, i.e. the coils A2
A$\overline{2}$, A3 A$\overline{3}$ , A11 A$\overline{11}$ and A12 A$\overline{12}$. With respect to Fig. 3 it will be noted that the coils A1 $\overline{A1}$ and A10 $\overline{A10}$ which can be connected in parallel are each disposed, relative to its corresponding pole, at the same or corresponding position such that for one pole the coil A1 $\overline{A1}$ is the counterpart of the coil A10 $\overline{A10}$ of the other pole. In Fig. 2 the coils A1 $\overline{A1}$, A2 $\overline{A2}$, A3 $\overline{A3}$ occupy the same position in relation to one pole as do the coils A10 $\overline{A10}$, A11 $\overline{A11}$, A12 $\overline{A12}$ in relation to the other pole, so that all the coils corresponding to one pole and in one limb of the parallel connection have, in the other limb, their counterparts corresponding to the other pole. A plurality of modes of connection is possible by using series, parallel or series-parallel arrangement of one or more coils from each pole group.

Similar series, series-parallel or parallel winding arrangements may be used for single layer and fractional slot types of winding provided that where coils or groups of coils are selected to be connected in parallel their resultant e.m.f.'s are of equal magnitude and in time phase. Such coils or groups of coils to be connected in parallel will be selected from identical positions in each pole.

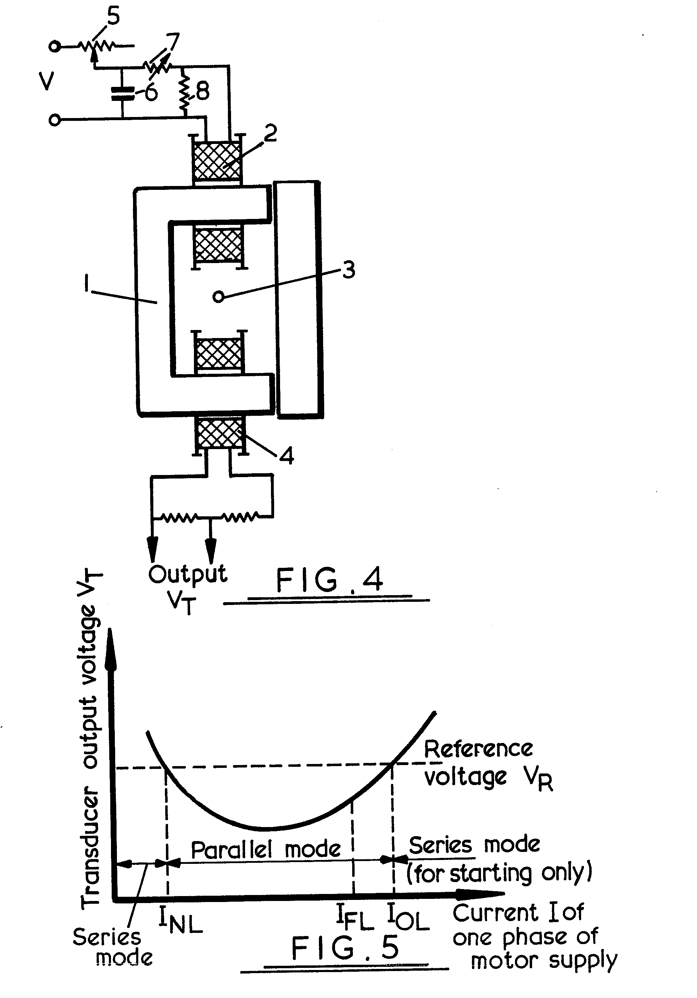

Fig. 4 shows a sensor suitable for use in a motor embodying the present invention. The sensor has a core 1 carrying a first winding 2 energised by a voltage source V which is derived from one phase of the motor supply. The core 1 is preferably comprised of laminated steel or ferrite that does not start to saturate below approximately 50% of full load motor current. At least one wire 3 (which may be a winding for low current) carrying the whole or part of the motor supply current I (Fig. 5) of one phase is positioned in the core 1, that current being the current (or a part thereof) of the same supply phase as that from which the voltage source V is derived. The core 1 also carries a second winding 4 which outputs a signal $V_T$ having a characteristic substantially as shown in Fig. 5 to a logic circuit where it is compared with a predetermined reference voltage $V_R$ (see Fig. 5) and used to control the switching of the coils of the motor. The winding 2 energised from the voltage source V has a resistor and capacitor network 5, 6, 7 and 8 connected together in series or parallel and placed across the winding 2 to bring the current of that winding in phase (by phase shifting the voltage signal) with that of the motor current to balance the magnetisation of the core 1 at a particular selected motor loading. The output $V_T$ from the winding 4 will usually be rectified and may also be attenuated to adjust its level.

In Fig. 5 $I_{OL}$, $I_{FL}$ and $I_{NL}$ respectively indicate overload current, full load current and no load or very light load current of one of the phases of the motor supply.

It will be readily appreciated that variations on the above sensor, and, indeed, different sensors may be provided in a motor embodying the present invention. For example, the motor current may be passed through the primary winding of a current transformer and the secondary current or voltage developed in the current transformer may be used alone or combined with the output of a voltage transformer or voltage divider to provide the required control signals.

Fig. 6 shows a block diagram of a complete control system for a motor embodying the present invention. In Fig. 6 the sensor comprising the core 1, voltage winding 2, current winding 3 and the signal winding 4 gives its output to a precision rectifier circuit 9 providing the rectified output voltage signal $V_T$ as input to a comparator 10 in which $V_T$ is compared with the predetermined reference voltage $V_{ref}$ the value of which is set by variable resistor 11. In Fig. 6 reference 12 is a common base voltage line. The output from comparator 10 is at logic "1" when $V_T > V_{ref}$ and at logic "0" when $V_T < V_{ref}$. The output from the comparator 10 is fed to both an inverter 13 (giving an output at the inverse logic level to its input) and to line 14 to a switch circuit 25 which is open if the signal on line 14 is at logic "0" and closed when that signal is at logic "1". The inverter output is supplied to line 15 to switch circuit 16 which is open when the signal on line 15 is at logic "0" and closes when that signal is at logic "1". The comparator output is also supplied to differentiator 17 and the inverter output is also supplied to differentiator 18. Each differentiator gives a peaked output pulse at logic "1" only when the input to the differentiator changes from logic "0" to logic "1". Both differentiators are connected to a monostable 19 which is tripped to give an output at logic "1" for a short period, for example twenty-five milliseconds, upon receiving an input pulse at logic "1". An "ORed" switch circuit 20 is normally closed but opens when the input thereto on either line 21 or 22 is at logic "1". Normally the logic level on line 22 is "0". Between switch circuits 20 and 25 is a driver 23 for the series mode switch S3 (see Figs. 2 and 3) which is closed in response to the driver being energised and opens when the driver is de-energised. Likewise between switch circuits 20 and 16 is a driver 24 for the parallel mode switches S1 and S2 which are closed when the driver 24 is energised and open when that driver is de-energised.

Each time the output voltage $V_T$ (see Fig. 5) of the sensor rises above reference voltage $V_R$ monostable 19 gives an output at logic "1" which opens switch circuit 20 for the aforesaid short period interrupting power to the switch drivers 23, 24 so all the switches S1, S2, S3, open, at the same time the signal on line 14 goes to logic "1" and that on line 15 to logic "0". Therefore switch 16 opens and switch 25 closes so that when switch 20 closes again after the short period expires, closed switches 20, 25 ensure switch driver 23 is energised to close the series mode switch S3. Each time the output voltage $V_T$ drops below $V_{ref}$ the logic levels on lines 14, 15 invert so switch 16 closes and switch 25 opens but both switch drivers are de-energised for the aforesaid short period by the open switch 20 which then closes allowing driver 24 to be energised, via closed switch 16, so that both the parallel mode switches S1 and S2 close.

It will be appreciated that since there are three phase windings in the motor switch drivers 23, 24 control three sets of the switches S1, S2 and S3, each set of the switches corresponding to a respective phase winding.

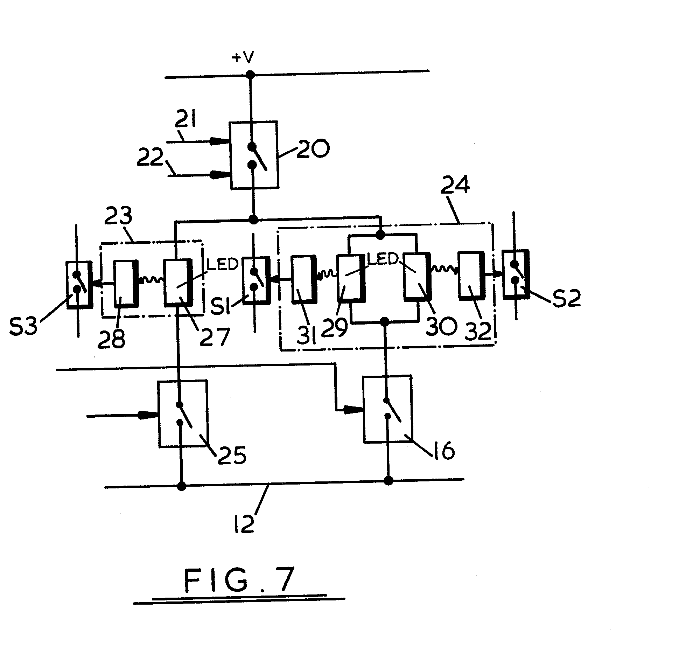

In Fig. 7, switch driver 23 comprises a light emitting diode (LED) 27 and an optotriac 28. When driver 23 is energised LED 27 gives a light signal sending optotriac 28 conducting to give an output causing switch S3 formed by or comprised of a power triac to switch on. The driver 24 can comprise LEDs 29 and 30 and optotriacs 31 and 32, and the switches S1 and S2 can each be formed by or comprise a power triac. Using this optical technique is one way of keeping the control circuit electrically isolated from the power to the motor windings.

On start up the series connection mode switches are closed to give the "soft start" conditions referred to hereinabove. This connection mode is maintained until the voltage ($V_T$) output from the motor sensor falls below the predetermined voltage $V_R$. After the heavy run up period is completed series or parallel mode connections are selected according to the loading on the shaft and the corresponding motor current demand.

In order to prevent overloading of the motor, the system of Fig. 6 provides a separate current sensing circuit for this purpose. A time delay is included in the circuit to prevent inadvertant operation under momentary over-loads and during starting. Ruturning to Fig. 6, an overload current transformer 33 (see also Figs. 2 and 3) observes the supply current of one phase and gives a voltage output which is a function of the current and is rectified by precision rectifier 34. That gives a voltage output which is compared by comparator 35 with a reference voltage $V_{OL}$ set by resistor 36 to a predetermined value which is an analogue of the maximum current of the said one phase which is permissible before overload occurs. Only when the output from rectifier 34 exceeds $V_{OL}$ does the comparator 35 give an output at logic "1". If that output continues at logic "1" for a time, for example a number of seconds, then at the end
of that time  delay     37 gives an output
which sets latch 38 to give a continuous output on
line 22 at logic "1", thereby opening the switch circuit
20 and de-energising the switch drivers 23, 24.  The
latch 38 can be re-set to cancel its logic "1" output
and give an output at logic "0" on line 22 in response
to an input 39 initiated by an operator pressing a button
(not shown) which may be in combination with a motor
start button.

The available supply voltage and frequency and
the required motor power and shaft speed will
influence the number of poles and the number of slots
per pole per phase that are chosen in the stator as
well as affecting the detailed winding design.
This will restrict the choice of the fraction of the
winding that can be conveniently switched into the
alternative series or parallel arrangements needed
respectively for the light load and heavy load
conditions.  The arrangement illustrated in Fig. 2
is likely to be the most convenient where the machine
has 6 poles or more.  The arrangement of Fig. 3 is most
suitable for machines with 2 or 4 poles.  Other
arrangements are also possible.  Various arrangements
of sensor may be used but to accommodate the soft
start facility an opposing current and voltage transducer
such as that shown in Fig. 4 is likely to be the best.

The present invention is best justified in place of a conventional motor in those applications where the motor runs for a relatively large proportion of the time at light load, e.g. running for more than 1000 hours per year at 25% output or lower. This may include machine tools, electric vehicles, process machinery, compressors and pumps. The larger the rating of the motor the easier it will usually be to justify the cost of the controller, especially for motors with relatively high losses rather than the more expensive low loss designs.

18. . 0128671

CLAIMS:

1. An A.C. electric motor comprising a winding comprising a first plurality of common phase electrical coils connected to the electrical supply, said coils forming a plurality of groups of coils each group corresponding to a respective pole, a second plurality of the said coils being permanently connected in series and constituting a first set, a second set of said coils being constituted by another one of the said coils or by a third plurality of the said coils in which the coils of said third plurality are permanently connected in series, the or each coil of the second set having a disposition in relation to the pole pitch of its corresponding pole which is the same as or the counterpart of the disposition of a said coil of the first set relation the pole pitch of its corresponding pole, switching means adapted to connect the sets in either of first or second configurations, the first configuration being the first and second sets in series, the second configuration being the coil or the coils of the second set in parallel with its counterpart coil or their counterpart coils on the first set, means for sensing the load torque on the motor or a parameter dependant thereon, and control means responsive to an output of said sensing means to operate the switching means to connect the electrical coils in one or other of said configurations capable of

0128671

delivering the power and torque required by the load on the motor whilst sustaining low energy losses over a typical duty cycle.

2. An electric motor according to claim 1, in which the number of coils in the first set is equal to the number of coils in the second set.

3. An electric motor according to claim 1, in which the number of coils in the first set is greater than the number of coils in the second set whereby when the sets are connected in the second configuration the coils are in a series-parallel arrangement.

4. An electric motor according to any one preceding claim, in which the first plurality of coils are stator coils.

5. An electric motor according to any one of claims 1 to 3 , in which the first plurality of coils are rotor coils.

6. An electric motor according to any one of claims 1 to 3, in which one said first plurality of coils are stator coils and another said first plurality of coils are rotor coils.

7. An electric motor according to any one of claims 1 to 3, in which switching between the first and second configurations is performed according to the load-torque of the motor.

8. An electric motor according to claim 1 in which the motor is powered by a polyphase electrical supply and there are a number of first pluralities of said coils, said number equalling the number of phases of the supply.

9. An electric motor according to any preceding claim in which the switching means comprises electronic switching devices.

10. An electric motor according to any preceding claim in which the sensing means detects the motor current in the or one phase of the electrical supply to the motor.

11. An electric motor according to claim 10 in which the motor current is detected using an electro-magnet device fed with signal current which is a function of the motor current in the or one phase of the electrical supply and the electromagnetic device has applied thereto a signal voltage derived from the same phase, and phase shifting means is provided to bring the two signals into phase one with the other.

12. An electric motor according to any preceding claim, wherein on start up the coils of the or each first plurality are all connected in series or in series-parallel to obtain a reduced flux level and a reduced motor current.

13. An electric motor according to claim 10 or claim 11, in which the sensing means gives an output voltage which is a function of the load torque, and the

0128671

switching means operates to connect the sets in the first or second configuration according to whether the output voltage is greater or less than a reference voltage.

14. An electric motor according to any one preceding claim in which the electrical supply to the coils of both sets is interrupted whilst the switching means operates to change the connection of the sets from one configuration to the other.

Pole-pitch    Pole - pitch

A1 A2 A3    A̅1̅0̅ A̅1̅1̅ A̅1̅2̅

A11 A12    A̅1̅    A̅2̅ A̅3̅    A10

FIG. 1

A1    A̅1̅ A2    A̅2̅ A3    A̅3̅ B

S1    S3    S2

33 A A10    A̅1̅0̅ A11    A̅1̅1̅ A12    A̅1̅2̅

FIG. 2

A1   A̅1̅ A2   A̅2̅ A3   A̅3̅ A11   A̅1̅1̅ A12   A̅1̅2̅ B

33 S1 S3 S2

A A10   A̅1̅0̅

FIG. 3

Output
$V_T$

## FIG. 4

FIG. 5

FIG. 6

Voltage coil sensor — 2, 1
Current coil — 3
Signal coil — 4

Precision Rectifier Circuit — 9
$V_T$
12, V ref, 11

Comparator — 10
Inverter — 13
Differentiator — 18
Monostable — 19
'O Red' switch circuit — 21, 20
+V

Differentiator — 17

22
23 — Drivers for series mode switch S3
24 — Drivers for parallel mode switches S1, S2
S3
S1 S2

15
14

switch circuit — 25
switch circuit — 16

Overload current transformer — 33
Precision Rectifier — 34
12, 36, $V_{OL}$
Comparator — 35
Delay — 37
Latch — 38
reset with start button — 39
12

0128671

3/4

FIG.7

0128671